**Europäisches Patentamt**

**European Patent Office**

**Office européen des brevets**

(19)

(11) Numéro de publication : **0 532 415 B1**

(12)

# FASCICULE DE BREVET EUROPEEN

(45) Date de publication du fascicule du brevet :
**18.10.95 Bulletin 95/42**

(51) Int. Cl.⁶ : **H01B 13/14,** H01B 13/24,
H01B 7/28

(21) Numéro de dépôt : **92402472.2**

(22) Date de dépôt : **10.09.92**

(54) **Corps isolant à haute rigidité diélectrique et procédé d'obtention d'un tel corps.**

(30) Priorité : **13.09.91 FR 9111336**

(43) Date de publication de la demande :
**17.03.93 Bulletin 93/11**

(45) Mention de la délivrance du brevet :
**18.10.95 Bulletin 95/42**

(84) Etats contractants désignés :
**CH DE FR GB IT LI SE**

(56) Documents cités :
**FR-A- 2 214 162**
**LU-A- 83 167**

(73) Titulaire : **ALCATEL CABLE**
**30, rue des Chasses**
**F-92111 Clichy Cédex (FR)**

(72) Inventeur : **Aladenize, Bernard**
**7, rue d'Athis**
**F-91360 Epinay sur Orge (FR)**
Inventeur : **Le Mehaute, Alain**
**90 Allée de la Bannière de Maupertuis**
**F-91190 Gif sur Yvette (FR)**

(74) Mandataire : **Pothet, Jean Rémy Emile Ludovic**
**c/o SOSPI**
**14-16 rue de la Baume**
**F-75008 Paris (FR)**

## Description

Le domaine de l'invention est celui des corps isolants et plus précisément celui des corps à haute rigidité diélectrique et des procédés permettant d'obtenir de tels corps.

De façon connue, la rigidité diélectrique d'un matériau correspond à l'énergie nécessaire pour rompre les liaisons internes de ce matériau. Ainsi, plus la rigidité diélectrique d'un matériau est importante, plus le champ électrique pouvant rompre les liaisons internes de ce matériau doit être élevé.

Dans le cas d'un matériau devant être soumis à un champ électrique, deux paramètres sont alors déterminants :
- le champ électrique local qui dépend du champ moyen appliqué, de la géométrie du matériau dans le champ électrique, et de la présence d'éventuelles hétérogénéités renforçant localement le champ (impuretés, vacuoles,...) ;
- l'énergie reliant les liaisons des molécules du matériau. Les liaisons les plus faibles peuvent être rompues par l'application du champ électrique et il s'en suit une dégradation du matériau.

Dans le cas de matériaux à base de polymères, les liaisons les plus faibles sont les liaisons de Van der Waals entre les molécules de polymères. L'énergie de ces liaisons dépend essentiellement de la distance entre les molécules. Plus cette distance est importante, plus l'énergie est faible.

Dans le polyéthylène par exemple, les claquages diélectriques se situent principalement dans les zones amorphes, c'est-à-dire hors structure cristalline, où la cohésion du matériau est la plus faible, alors que les zones cristallines résistent plus efficacement grâce à leurs distances inter-molécules plus faibles.

Ainsi, la rigidité diélectrique d'un polymère, c'est-à-dire sa résistance aux champs électriques, augmente avec l'organisation de la structure du polymère et avec la diminution de la distance entre les molécules, ces deux facteurs étant liés.

On peut ainsi obtenir des matériaux à rigidité diélectrique élevée lorsque leur fabrication consiste à étirer ces matériaux. Cette explication figure notamment dans la revue technique IEEE Trans. EI n°22 (5) p.573 de 1987.

La fabrication de polymères s'opère soit à partir de l'état fondu, soit à une température supérieure à la température de transition vitreuse, à laquelle apparaissent les mouvements moléculaires. Les caractéristiques du produit fini dépendent du procédé de fabrication et plus précisément de l'intensité des déformations appliquées au polymère fondu. Les contraintes appliquées au polymère organisent la structure du produit final et peuvent être de deux types : cisaillement et extension. Pour chaque type de contrainte, la déformation locale réalisée est liée au rapport entre la contrainte et la viscosité du polymère :

$$GV = C/V \quad (1)$$

où :
- GV est le gradient de vitesse entre deux points du polymère.
- C est la contrainte appliquée
- V est la viscosité du polymère.

Ainsi, pour une contrainte appliquée donnée, l'organisation du polymère est inversement proportionnelle à sa viscosité. On obtient donc une rigidité diélectrique élevée du matériau lorsque sa viscosité est faible. Réciproquement, une forte viscosité du matériau conduit à une rigidité diélectrique faible du polymère.

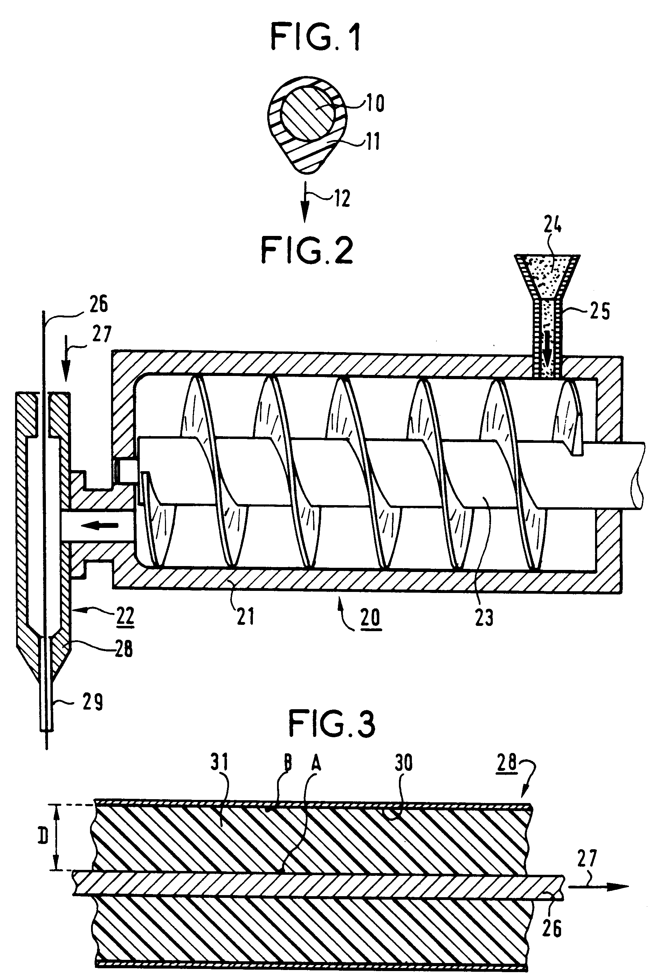

Cependant, dans le cas d'une fabrication du matériau par extrusion, par exemple pour la fabrication de l'isolant d'un câble électrique, la viscosité globale du matériau à la température de fabrication doit être suffisamment élevée pour éviter une déformation importante de l'isolant lors de la phase de refroidissement du câble. En effet, comme représenté à la figure 1, représentant une vue transversale d'un câble électrique issu d'une boudineuse de gainage d'un conducteur électrique 10, encore appelée extrudeuse, le polymère 11 servant à isoler le conducteur 10 a tendance à couler selon un sens 12 du fait de la force gravitationnelle, lorsque ce polymère ne présente pas une viscosité suffisamment importante. Il en résulte que le conducteur 10 est excentré par rapport à l'isolant 11 et la qualité géométrique de l'objet extrudé n'est plus respectée.

On ne sait donc pas fabriquer par extrusion des produits à base de polymères présentant des rigidités diélectriques importantes puisqu'il y a une antinomie entre d'une part une bonne qualité diélectrique du produit, nécessitant une viscosité faible, et d'autre part une bonne qualité géométrique de l'objet extrudé, nécessitant une viscosité élevée.

La présente invention a notamment pour objectif de fournir un procédé de fabrication de tels produits extrudés palliant cet inconvénient.

Plus précisément, un des objectifs de l'invention est de fournir un procédé permettant de fabriquer des produits en polymères présentant simultanément une bonne qualité géométrique et une bonne rigidité diélectrique.

Un autre objectif de l'invention est de fournir de tels produits présentant à la fois une bonne qualité géométrique et une bonne rigidité diélectrique.

Ces objectifs, ainsi que d'autres qui apparaîtront par la suite, sont atteints grâce à un corps isolant électrique comprenant au moins deux matériaux polymères, ce corps étant caractérisé en ce que la constitution intérieure du corps est formée majoritairement par un premier matériau polymère et en ce que la constitution superficielle du corps est formée majoritairement par un second matériau polymère, le premier matériau polymère présentant une masse moléculaire plus importante que le second matériau polymère, la proportion dans le corps du premier matériau polymère par rapport à celle du second matériau polymère diminuant progressivement de la constitution intérieure vers la constitution superficielle.

La constitution intérieure correspond au coeur du corps et la constitution superficielle à celle de ce corps au niveau de ses extrémités.

On obtient ainsi un gradient de masse moléculaire dans le corps isolant électrique. On peut remarquer que, comme l'indice de fluidité d'un matériau augmente lorsque sa masse moléculaire diminue, et réciproquement, le corps de l'invention peut également être défini comme présentant une constitution superficielle d'indice de fluidité plus important que l'indice de fluidité de la constitution intérieure, ce corps présentant une diminution d'indice de fluidité de la constitution superficielle vers la constitution intérieure. Un résultat de ce type peut être obtenu dès lors que l'on mélange au moins deux matériaux polymères de masses moléculaires différentes.

Avantageusement, le rapport de l'indice de fluidité le plus élevé et de l'indice de fluidité le plus faible est compris entre 3 et 100 et préférentiellement entre 10 et 30.

Le corps de l'invention se présente, dans un mode de réalisation préférentiel, sous la forme d'un tube extrudé sur un conducteur électrique.

On obtient alors un isolant de conducteur électrique, et les proportions des matériaux polymères sont telles que l'indice de fluidité moyen est compris entre 0,05 et 5 et préférentiellement entre 0,2 et 2.

Selon un autre mode de réalisation, le corps de l'invention se présente sous la forme d'une feuille pouvant par exemple servir d'isolant électrique entre deux électrodes. Une telle feuille peut notamment être obtenue par injection et dans ce cas, les proportions des matériaux polymères sont telles que l'indice de fluidité moyen est compris entre 5 et 8.

Dans un mode de réalisation préférentiel, les matériaux polymère sont de nature identique et par exemple constitués par du polyéthylène.

L'invention concerne également un procédé de fabrication d'un tel corps, ce procédé pouvant consister à :
- mélanger les matériaux polymères;
- chauffer le matériau résultant du mélange des matériaux polymères;
- appliquer une contrainte au matériau résultant de façon à l'organiser.

L'organisation a pour objectif de permettre une répartition non homogène des matériaux polymères, afin d'obtenir un gradient de masse moléculaire dans le corps ainsi obtenu.

Le procédé peut également consister à :
- élaborer un matériau de synthèse dont la courbe de concentration moléculaire par rapport à la masse moléculaire possède au moins deux pics de masse moléculaire différents;
- chauffer le matériau de synthèse;
- appliquer une contrainte à ce matériau de synthèse de façon à l'organiser.

Un tel matériau de synthèse peut par exemple être obtenu par synthèse chimique, en modifiant la cinétique de polymérisation d'un monomère donné en y ajoutant temporairement un additif. On obtient ainsi un autre monomère d'indice de fluidité différent. On obtient ainsi un matériau présentant deux pics de masse moléculaire.

Les contraintes précitées peuvent être appliquées au matériau en le comprimant dans une filière d'extrusion, le matériau se conformant autour d'un conducteur d'électricité à isoler. Ce mode de mise en oeuvre correspond à la fabrication d'un câble électrique.

Ces contraintes peuvent également consister à mouler le matériau, par injection ou non, dans un moule.

D'autres caractéristiques et avantages de l'invention apparaîtront à la lecture de la description suivante de modes de réalisation préférentiels, donnés à titre illustratif et non limitatif, et des dessins annexés dans lesquels :
- la figure 1 est une vue en coupe transversale d'un câble connu isolé avec un polymère trop fluide lors de l'extrusion;
- la figure 2 représente schématiquement la fabrication d'un isolant polymère pour le revêtement d'un conducteur électrique;
- la figure 3 est une vue en coupe de la filière d'extrusion de la figure 2;
- la figure 4 représente la variation de la vitesse d'un isolant dans une filière, en fonction de la distance par rapport à un conducteur que l'on veut enrober de cet isolant;
- la figure 5 représente le module du gradient de vitesse du matériau en fonction de la distance par rapport à ce conducteur à isoler;
- la figure 6 est une vue en coupe transversale d'un câble pourvu d'un isolant selon l'invention;
- la figure 7 est une vue en coupe transversale d'un autre câble pourvu d'un isolant selon l'invention;
- la figure 8 est une coupe longitudinale d'une feuille en matériau isolant selon l'invention;
- la figure 9 est une coupe d'un corps obtenu par injection d'un mélange de matériaux de masses moléculaires différentes;
- la figure 10 représente les concentrations moléculaires d'un matériau de synthèse pouvant être utilisé dans la présente invention.

La figure 1 a été décrite en référence à l'état de la technique.

Afin de remédier à la déformation de l'isolant, la présente invention propose de réaliser un matériau isolant polymère selon le procédé illustré dans la figure 2.

La figure 2 représente schématiquement la fabrication d'un isolant polymère pour conducteur électrique.

Une boudineuse 20 est composée d'un corps 21 de boudineuse et d'une tête 22 de boudineuse. Le corps 21 comprend une vis sans fin 23 d'alimentation destinée à amener sous pression un matériau 24 polymère présent dans un corps d'admission 25 en direction de la tête 22. Le corps 21 comprend également des moyens de chauffage du matériau 24 destinés à amener ce matériau polymère à une température telle que celui-ci se présente à l'état fondu dans la tête 22 de la boudineuse 20. Un fil conducteur d'électricité 26 passe à travers la tête 22 de boudineuse selon une direction perpendiculaire à la vis sans fin 23 d'alimentation. Le fil 26 est entraîné à travers la tête 22 selon une direction 27 par un cabestan non représenté. La tête 22 est constituée d'une filière d'extrusion 28 dont l'extrémité de sortie du fil 26 présente un rétrécissement. Le fil 26 sort de la filière 28 enveloppé par une gaine 29 isolante. Ensuite, le conducteur isolé est refroidi progressivement, par exemple en traversant des bacs à eau à températures décroissantes.

La figure 3 représente une coupe partielle de la filière 28.

La filière 28 d'extrusion assure une uniformisation de l'isolant autour du conducteur 26. A la sortie de la filière 28, le conducteur 26 est donc recouvert d'une gaine isolante. Le conducteur 26 parcourt la filière 28 à une certaine vitesse et l'intérieur 31 de la filière 28 est rempli de matériau isolant fondu et sous pression. La vitesse d'un point A du matériau isolant à proximité immédiate du conducteur 26 est égale à celle du conducteur 26. Par contre, du fait de la viscosité du matériau dans la filière 28, il se produit des accrochages de ce matériau contre la surface interne 30 de la filière 28 et la vitesse du matériau fluide à un point B quelconque de cette surface est nulle.

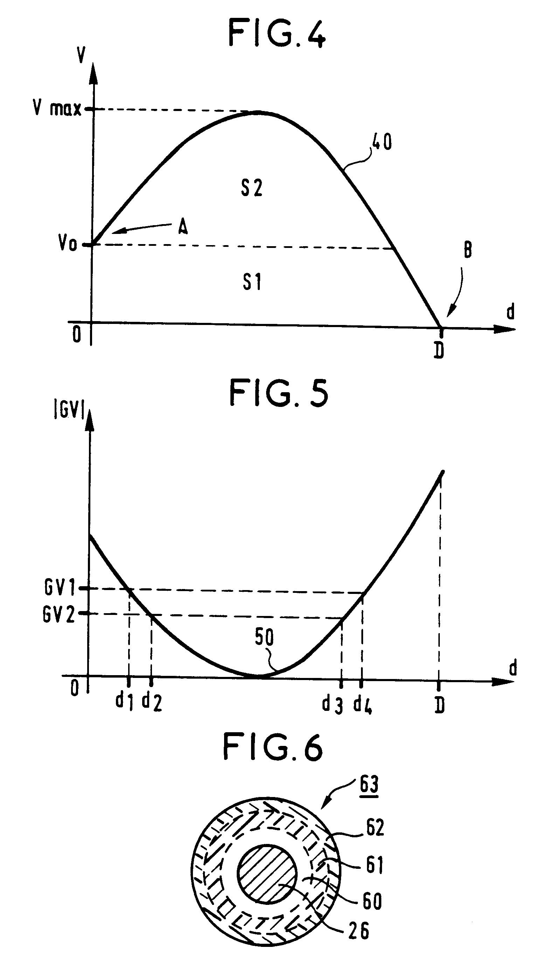

La courbe 40 de la figure 4 montre l'évolution de la vitesse de l'isolant en fonction de la distance qui le sépare du conducteur d'électricité 26. Cette distance est au maximum égale à D (fig.3).

Le conducteur 26 est tiré à une vitesse Vo et l'isolant fluide en contact direct avec ce conducteur 26 est donc également à cette vitesse Vo (point A). Les calculs montrent que la vitesse de l'isolant augmente jusqu'à une valeur maximale Vmax avant de décroître jusqu'à zéro (point B).

Le système physique correspondant à la filière a naturellement pour tendance de compenser ces gradients de vitesse et on a approximativement S1 = S2 où S1 et S2 correspondent respectivement aux surfaces délimitées par la courbe 40 en-dessous et au-dessus de la vitesse Vo du conducteur. Les gradients de vitesse permettent d'obtenir un cisaillement du matériau sous pression, selon la relation 1. La différence de vitesse entre deux points du matériau détermine alors la propriété diélectrique du matériau c'est-à-dire l'orientation des molécules.

La présente invention exploite cette caractéristique physique due à un déplacement d'un élément dans un milieu fluide.

Selon l'invention, le matériau 24 (figure 2) introduit dans l'extrudeuse est un mélange d'au moins deux polymères de masses moléculaires différentes. Dans le cas d'un mélange de deux polymères, un de ces polymères a une masse moléculaire élevée par rapport à celle de l'autre polymère. On peut également dire qu'un de ces polymères présente un indice de fluidité (Melt Flow Index) plus faible que celui de l'autre polymère.

Ce mélange de polymères, après avoir été chauffé, est admis dans la filière d'extrusion 28. La compensation des gradients de vitesse permet alors au matériau de viscosité faible de se placer aux endroits de gradient de vitesse élevé et au matériau de viscosité élevée de se placer aux endroits de gradient de vitesse faible.

Comme dans le cas de la fabrication d'isolants classiques, un agent de réticulation peut être ajouté au mélange 24 des deux polymères.

La courbe 50 de la figure 5 illustre la valeur absolue du gradient de vitesse en fonction de la distance par rapport au conducteur électrique 26.

On constate qu'à proximité du conducteur électrique 26, dans une zone de largeur d1, correspondant à une des constitutions superficielles de l'isolant, le gradient de vitesse GV est important et supérieur à un gradient GV1. C'est donc principalement dans cette zone que le matériau de masse moléculaire faible (indice de viscosité élevé) viendra se placer. Il en va de même pour la zone comprise entre d4 et D, c'est-à-dire pour l'extérieur du câble issu de l'extrudeuse. Cette zone correspond à l'autre constitution superficielle de l'isolant.

En revanche, dans un milieu compris entre d2 et d3, correspondant à la constitution intérieure de l'isolant, le gradient de vitesse est faible (inférieur à un gradient GV2) et le matériau de viscosité élevée, c'est-à-dire celui de masse moléculaire importante, viendra donc s'y placer.

Une coupe transversale d'un câble obtenu par un tel mélange de polymère est représenté à la figure 6.

Un câble 63 comporte un conducteur électrique central 26 isolé par un matériau formé de deux polymères de masses moléculaires différentes.

Le matériau isolant se présente sous la forme d'un tube composé de trois zones successives. Ces zones ont été représentées en traits discontinus pour montrer qu'il n'y a pas de changement brutal de masse moléculaire, mais qu'il s'agit d'une évolution continue de masse moléculaire, c'est-à-dire d'indice de viscosité. Les zones représentées peuvent cependant être appelées couches pour des commodités de rédaction. Ainsi, une première couche 60 interne présente une masse moléculaire faible par rapport à celle d'une couche intermédiaire 61. Une couche externe 62 de masse moléculaire faible recouvre la couche 61 de masse moléculaire élevée. Les couches 60 et 62 forment la constitution superficielle de l'isolant alors que la couche 61 forme la constitution intérieure de cet isolant.

Un câble électrique de ce type comprend donc une isolation électrique en un matériau présentant un gradient de masse moléculaire.

Un tel câble présente une meilleure rigidité diélectrique que les câbles existants puisque les couches 60 et 62 présentent des masses moléculaires faibles. C'est en effet aux interfaces isolant-électrodes générant un champ électrique que les champs électriques sont les plus importants. On obtient donc un renforcement diélectrique des endroits de l'isolant qui sont les plus sollicités, puisque ces zones sont les plus organisées.

De plus, comme la couche intermédiaire 61 présente un indice de viscosité faible lorsque le câble sort de l'extrudeuse, on obtient une bonne qualité géométrique de l'isolant et un bon centrage du conducteur dans l'ensemble de l'isolant.

La présente invention permet donc d'obtenir simultanément une bonne rigidité diélectrique du matériau isolant et une bonne qualité géométrique du câble.

De façon plus générale, il est possible de réaliser un mélange de plusieurs polymères présentant des indices de viscosité différents. Ces polymères vont alors se répartir dans l'isolant obtenu de telle sorte que la constitution intérieure de l'isolant comporte majoritairement le polymère d'indice de viscosité le plus faible et que la constitution superficielle de l'isolant comporte majoritairement le polymère d'indice de viscosité le plus fort. Le renforcement diélectrique de l'isolant est ici réalisé graduellement.

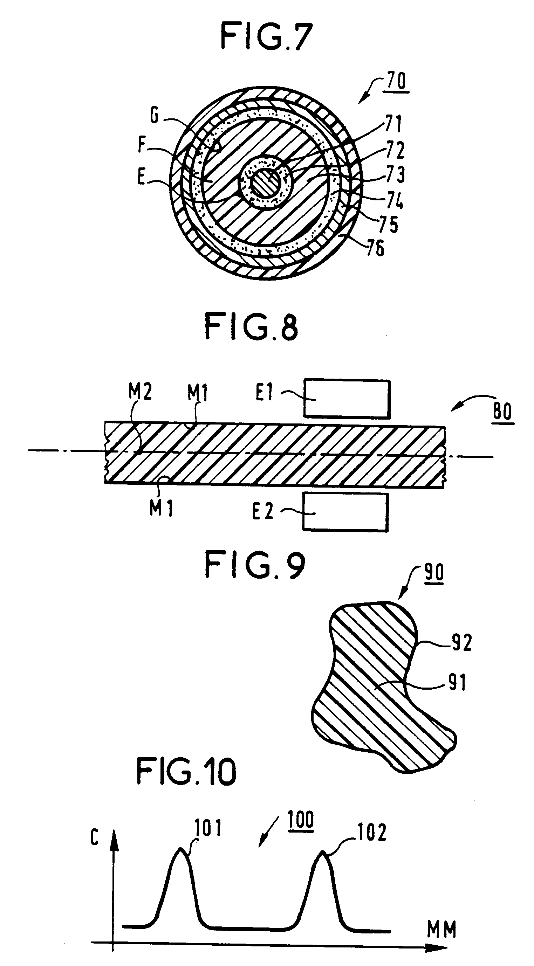

Un câble électrique obtenu selon le procédé de l'invention peut également comprendre d'autres matériaux, comme par exemple des écrans semi-conducteurs en contact avec des électrodes différentes. Un tel câble est représenté à la figure 7.

Un câble 70 comporte successivement, de l'intérieur vers l'extérieur, un fil conducteur 71, une première couche en matériau semi-conducteur 72, un isolant 73 obtenu selon le procédé de l'invention, une seconde couche 74 en matériau semi-conducteur, une couche 75 en un matériau conducteur, par exemple en aluminium, et enfin une couche 76 isolante formant la surface extérieure du câble 70.

Les couches semi-conductrices 72 et 74 ont pour fonction de répartir de façon homogène les potentiels électriques aux interfaces avec l'isolant 73. Le fil conducteur 71 assure la transmission d'un courant électrique, le retour étant effectué grâce à la couche 75.

A l'interface notée E, correspondant au contact entre la première couche 72 semi-conductrice et l'isolant 73, et à l'interface notée G, correspondant au contact entre la seconde couche 74 semi-conductrice et l'isolant 73, la rigidité diélectrique de l'isolant 73 est maximale, alors qu'au milieu de la couche isolante 73 (zone F), le polymère visqueux (à l'état de fusion) assure une tenue mécanique de l'isolant et ainsi une bonne qualité géométrique du câble 70.

Un tel câble 70 est réalisé à l'aide de boudineuses en série, les couches 72 à 76 étant successivement déposées selon un procédé connu. Les interfaces E et G constituent les constitutions superficielles alors que la zone F correspond à la constitution intérieure.

Selon un mode de réalisation préférentiel de l'invention, les polymères que l'on mélange ont la même nature chimique, c'est-à-dire constitués des mêmes molécules. Un mélange de polymères de même nature chimique permet notamment une réalisation aisée de l'isolant du fait de la compatibilité chimique des matériaux évitant des problèmes aux interfaces.

Ce polymère peut par exemple être du polyéthylène ou un copolymère de polyéthylène. Il est également possible d'utiliser du caoutchouc d'éthylène-propylène (EPR) ou un terpolymère d'éthylène-propylène-diène (EPDM). Plus le nombre de monomères de la chaîne constituant un des deux polymères est important, plus la viscosité du polymère en fusion à la sortie de la boudineuse sera élevée et l'organisation faible.

Un autre avantage de la présente invention est que la présence, dans la filière, d'un polymère fluide au niveau de la surface intérieure 30 de la filière (point B, figure 3), permet une lubrification du système. En effet, le matériau polymère étant fluide à ce niveau là, les frottements contre la surface intérieure 30 de la filière sont réduits et on limite ainsi l'auto-échauffement du polymère. Dans l'état de la technique, il était nécessaire de limiter la vitesse de traction du fil électrique pour ne pas atteindre des valeurs de températures trop élevées, un échauffement excessif pouvant conduire à une décomposition de l'isolant. Avec le procédé selon l'invention, ces frottements sont réduits et il est donc possible d'augmenter la vitesse de fabrication d'un tel câble électrique.

L'invention s'applique à tout type de câbles électriques et notamment aux câbles haute-tension où le champ électrique entre le conducteur central et un conducteur de retour de courant est très important.

L'isolation électrique d'un conducteur peut par exemple être obtenue en mélangeant 10% de polyéthylène d'indice de viscosité supérieur à 5 et 90% de polyéthylène d'indice de viscosité compris entre 0,2 et 2.

Pour la fabrication d'isolants de conducteurs électriques, les polymères utilisés sont généralement de type basse densité et il est avantageux d'utiliser des polyéthylènes dont les indices de fluidité (MFI) sont très différents et compris entre 0,05 et 10. Dans le cas d'un mélange de deux polyéthylènes, un de ces polyéthylènes a par exemple un indice de fluidité compris entre 0,05 et 0,1 alors que l'autre polyéthylène a un indice de fluidité compris entre 3 et 5. De façon générale, plus la différence de fluidité est importante, plus la répartition des polymères sera importante. En pratique, il est souhaitable que le rapport des indices de fluidité soit compris entre 3 et 100 et préférentiellement entre 10 et 30.

Si plus de deux polymères sont mélangés, le rapport de l'indice de fluidité le plus élevé et celui d'indice de fluidité le plus faible est également compris entre 3 et 100 et préférentiellement entre 10 et 30.

Les proportions des polymères sont telles que l'indice de fluidité moyen est environ compris entre 0,05 et 5 et préférentiellement entre 0,2 et 2. Un indice de fluidité moyen compris entre 0,2 et 2 permet une extrusion facile de l'isolant sur un conducteur électrique. L'indice de fluidité moyen correspond à la somme des produits des indices de fluidité et des taux de chaque polymère. Par exemple, un mélange de 90% en poids d'un premier polymère d'indice de fluidité égal à 0,1 avec 10% en poids d'un second polymère d'indice de fluidité égal à 10 correspond à un indice de fluidité moyen sensiblement égal à 1,1.

Ce calcul d'indice de fluidité moyen s'applique également lorsque plus de deux polymères sont mélangés.

Le mélange des matériaux polymères peut également s'opérer à l'aide d'une extrudeuse comportant plusieurs entrées, chaque entrée étant affectée à l'admission d'un matériau polymère.

Bien entendu, la présente invention n'est pas limitée à l'isolation de câbles électriques et s'applique dès lors que l'on veut isoler efficacement une électrode d'une autre. Un isolant selon l'invention peut alors se présenter sous la forme d'une feuille (couche plane), comme représenté à la figure 8.

Une feuille 80 isolante en matériau polymère est interposée entre deux électrodes E1 et E2. La feuille 80 a une constitution composée de plusieurs couches de polymères. La masse moléculaire de ces polymères augmente des couches internes vers les couches externes. Une telle feuille isolante peut par exemple être utilisée dans des moteurs électriques pour assurer l'isolation des bobinages. On peut l'appliquer à l'isolation d'électrodes de condensateurs.

Une feuille de ce type est avantageusement moulée sur une électrode à isoler. Sa fabrication peut être obtenue par moulage, extrusion, ou injection. Ces trois procédés permettent d'organiser le matériau. La gamme des polymères utilisés peut être plus importante que pour la fabrication de câbles, et on peut par exemple utiliser des ABS ou des polyamides.

Lors d'une fabrication par injection ou moulage, le rapport de l'indice de fluidité du polymère le plus fluide à l'indice de fluidité du polymère le plus visqueux est avantageusement également compris entre 3 et 100 et préférentiellement entre 10 et 30. En revanche, l'indice de fluidité moyen peut être plus élevé et compris entre 5 et 8.

Dans le cas d'une fabrication d'un corps composé du matériau selon l'invention par injection, le polymère sous pression est admis dans un moule. La répartition des polymères s'effectue d'une part dans la conduite d'admission du polymère en fusion dans le moule et d'autre part dans le moule. Dans une telle conduite d'admission, le polymère s'accroche également aux parois internes de la conduite, d'où une répartition naturelle des polymères de viscosité différentes. De plus, dans le moule, du fait de la pression exercée, on observe également une telle répartition des polymères. Bien entendu, selon la forme du corps à obtenir, et la forme de la conduite d'admission, le gradient de vitesse peut avoir une allure plus complexe que celle représentée à la figure 5.

Le corps obtenu présente alors une structure de plus en plus renforcée de l'intérieur vers l'extérieur. Le produit dont la masse moléculaire est la plus élevée est le plus à l'intérieur. Il est ainsi possible de réaliser par injection des corps de formes complexes, par exemple des boîtiers isolants ou des connecteurs.

Des polymères isolants selon l'invention peuvent également être obtenus par simple moulage, par exemple par compression de la matière en fusion. La répartition des polymères s'effectue alors de la même manière, cette répartition s'opérant dans le moule grâce à la pression exercée pour le moulage.

Un corps obtenu par injection ou moulage est représenté à la figure 9. Sur cette coupe, un corps 90 présente une constitution intérieure 91, constituant le coeur de ce corps, de masse moléculaire importante et une constitution superficielle 92 de masse moléculaire faible. La constitution superficielle 92 peut ici être assimilée à une surface fermée de faible épaisseur.

De façon générale, le coeur du matériau isolant de l'invention présente une masse moléculaire importante alors que les extrémités de ce matériau présentent une masse moléculaire plus faible.

L'injection et le moulage de matériaux polymères de masses moléculaires différentes permettent donc de réaliser des corps isolants de formes complexes, présentant simultanément une bonne géométrie et une rigidité diélectrique élevée.

Un autre avantage de l'invention est que l'isolant obtenu présente une structure feuilletée. On obtient ainsi un renforcement progressif de l'intérieur vers l'extérieur et une meilleure isolation, notamment en courant continu.

Selon un autre mode de mise en oeuvre de l'invention, le matériau chauffé et auquel est appliqué une contrainte permettant de l'organiser est obtenu par synthèse. Ce matériau présente alors deux pics de concentration moléculaire distincts, comme représenté à la figure 10.

La figure 10 représente les concentrations moléculaires d'un matériau obtenu par synthèse pouvant être utilisé dans la présente invention. On a représenté en abscisse la masse moléculaire MM de ce matériau de synthèse et en ordonnée la concentration moléculaire à la synthèse C.

La courbe 100 de concentration moléculaire présente un premier pic 101 de masse moléculaire faible par rapport à celle d'un deuxième pic 102 de masse moléculaire plus élevée. Un matériau de synthèse de ce type présente donc une caractéristique de concentration de masse moléculaire ayant la même allure que celle d'un mélange de deux polymères de masses moléculaires différentes. Ce matériau peut être obtenu en introduisant un additif pendant l'étape de polymérisation. Cette addition peut être faite à plusieurs instants de la polymérisation du monomère. Cette opération a pour effet de modifier la cinétique de la polymérisation et aboutit à une répartition de masse moléculaire à plusieurs maximums.

**Revendications**

1. Corps isolant électrique comprenant au moins deux matériaux polymères, caractérisé en ce que la constitution intérieure (61,F,M2,91) dudit corps (73,80,90) est formée majoritairement par un premier matériau polymère et en ce que la constitution superficielle (60,62,E,G,M1,92) dudit corps (73,80,90) est formée majoritairement par un second matériau polymère, ledit premier matériau polymère présentant une masse moléculaire plus importante que ledit second matériau polymère, la proportion dans ledit corps (73,80,90) dudit premier matériau polymère par rapport à celle dudit second matériau polymère diminuant progressivement de ladite constitution intérieure (61,F,M2,91) vers ladite constitution superficielle (60,62,E,G,M1,92).

2. Corps selon la revendication 1, caractérisé en ce que le rapport de l'indice de fluidité dudit second matériau polymère et de l'indice de fluidité dudit premier matériau polymère est compris entre 3 et 100 et préférentiellement entre 10 et 30.

3. Corps selon l'une des revendications 1 et 2, caractérisé en ce qu'il se présente sous la forme d'un tube (73) extrudé sur un conducteur électrique (26,71).

4. Corps selon la revendication 3, caractérisé en ce que les proportions desdits matériaux polymères sont telles que l'indice de fluidité moyen est compris entre 0,05 et 5 et préférentiellement entre 0,2 et 2.

5. Corps selon l'une des revendications 1 et 2, caractérisé en ce qu'il se présente sous la forme d'une feuille (80).

6. Corps selon la revendication 5, caractérisé en ce que les proportions desdits matériaux polymères sont telles que l'indice de fluidité moyen est compris entre 5 et 8.

7. Corps selon l'une des revendications 1 à 6, caractérisé en ce que lesdits matériaux polymères sont de nature identique.

8. Corps selon l'une des revendications 1 à 7, caractérisé en ce que lesdits matériaux polymères sont constitués par du polyéthylène.

9. Procédé de fabrication d'un corps selon l'une des revendications 1 à 8, caractérisé en ce qu'il consiste à :
   - mélanger lesdits matériaux polymères;
   - chauffer le matériau résultant du mélange desdits matériaux polymères;
   - appliquer une contrainte audit matériau résultant de façon à l'organiser.

10. Procédé de fabrication d'un corps selon l'une des revendications 1 à 8, caractérisé en ce qu'il consiste à :
    - élaborer un matériau de synthèse dont la courbe de concentration moléculaire par rapport à la masse moléculaire possède au moins deux pics de masse moléculaire différents;
    - chauffer ledit matériau de synthèse;
    - appliquer une contrainte audit matériau de synthèse de façon à l'organiser.

11. Procédé selon l'une des revendications 9 et 10, caractérisé en ce que ladite contrainte est appliquée audit matériau en comprimant ledit matériau dans une filière d'extrusion (28), ledit matériau se conformant autour d'un conducteur d'électricité (26) à isoler.

12. Procédé selon l'une des revendications 9 et 10, caractérisé en ce que ladite contrainte est appliquée audit matériau en moulant par injection ledit matériau dans un moule.

13. Procédé selon l'une des revendications 9 et 10, caractérisé en ce que ladite contrainte est appliquée audit matériau en comprimant ledit matériau dans un moule.

**Patentansprüche**

1. Elektrischer Isolierkörper, der mindestens zwei Polymermaterialien besitzt, dadurch gekennzeichnet, daß der innere Aufbau (61, F, M2, 91) des Körpers (73, 80, 90) überwiegend von einem ersten Polymermaterial und die Oberflächenzone (60, 62, E, G, M1, 92) des Körpers (73, 80, 90) überwiegend von einem zweiten Polymermaterial gebildet wird, wobei das erste Polymermaterial eine größere Molekülmasse als das zweite Polymermaterial besitzt und der Anteil des ersten Polymermaterials im Körper (73, 80, 90) bezüglich dem des zweiten Polymermaterials progressiv vom inneren Aufbau (61, F, M2, 91) zur Oberfläche (60, 62, E, G, M1, 92) hin abnimmt.

2. Körper nach Anspruch 1, dadurch gekennzeichnet, daß das Verhältnis des Fließfähigkeitswerts des zweiten Polymermaterials zum Fließfähigkeitswert des ersten Polymermaterials zwischen 3 und 100 und vorzugsweise zwischen 10 und 30 liegt.

3. Körper nach einem der Ansprüche 1 und 2, dadurch gekennzeichnet, daß er als Rohr (73) geformt ist, das um einen elektrischen Leiter (26, 71) extrudiert ist.

4. Körper nach Anspruch 3, dadurch gekennzeichnet, daß die Anteile der Polymermaterialien so gewählt sind, daß der mittlere Fließfähigkeitswert zwischen 0,05 und 5, vorzugsweise zwischen 0,2 und 2 liegt.

5. Körper nach einem der Ansprüche 1 und 2, dadurch gekennzeichnet, daß er in Form einer Folie (80) vorliegt.

6. Körper nach Anspruch 5, dadurch gekennzeichnet, daß die Anteile der Polymermaterialien so gewählt sind, daß der mittlere Fließfähigkeitswert zwischen 5 und 8 liegt.

7. Körper nach einem der Ansprüche 1 bis 6, dadurch gekennzeichnet, daß die Polymermaterialien von gleicher Art sind.

8. Körper nach einem der Ansprüche 1 bis 7, dadurch gekennzeichnet, daß die Polymermaterialien von Polyäthylen gebildet werden.

9. Verfahren zur Herstellung eines Körpers nach einem der Ansprüche 1 bis 8, gekennzeichnet durch folgende Verfahrensschritte:
   - Mischung der Polymermaterialien;
   - Erwärmung des aus der Mischung der Polymermaterialien resultierenden Materials;

   - Anwendung einer Kraft auf das resultierende Material, so daß sich dieses ordnet.

10. Verfahren zur Herstellung eines Körpers nach einem der Ansprüche 1 bis 8, gekennzeichnet durch folgende Verfahrensschritte:
    - Bildung eines Synthesematerials, dessen Kurve der Molekülkonzentration bezüglich der Molekülmasse mindestens zwei unterschiedliche Maxima der Molekülmasse aufweist,
    - Erwärmung des Synthesematerials,
    - Anwendung einer Kraft auf dieses Synthesematerial, so daß es sich ordnet.

11. Verfahren nach einem der Ansprüche 9 und 10, dadurch gekennzeichnet, daß die Kraft auf das Material angewendet wird, indem das Material in einer Preßdüse (28) komprimiert wird, wobei das Material sich um den zu isolierenden elektrischen Leiter (26) legt.

12. Verfahren nach einem der Ansprüche 9 und 10, dadurch gekennzeichnet, daß die Kraft auf das Material angewendet wird, indem das Material in eine Form unter Druck eingespritzt wird.

13. Verfahren nach einem der Ansprüche 9 und 10, dadurch gekennzeichnet, daß die Kraft auf das Material angewendet wird, indem das Material in einer Form komprimiert wird.

**Claims**

1. An electrically insulating body comprising at least two polymer material, characterized in that the internal structure (61, F, M2, 91) of said body (73, 80, 90) is mainly formed by a first polymer material and that the surface structure (60, 62, E, G, M1, 92) of said body is mainly formed by a second polymer material, said first polymer material having a higher molecular weight than said second polymer material, the proportion in said body (73, 80, 90) of said first polymer material relative to said second polymer material reducing progressively from said internal structure (61, F, M2, 91) towards said surface structure (60, 62, E, G, M1, 92).

2. A body according to claim 1, characterized in that the ratio between the melt flow index of said second polymer material and the melt flow index of said first polymer material is from 3 to 100, preferably from 10 to 30.

3. A body according to claim 1 or 2, characterized in that it takes the form of a tube (73) extruded on to an electric conductor (26, 71).

4.  A body according to claim 3, characterized in that the proportions of said polymer material are such that the average melt flow index is from 0.05 to 5, preferably from 0.2 to 2.

5.  A body according to claim 1 or 2, characterized in that it takes the form of a sheet.

6.  A body according to claim 6, characterized in that the proportions of said polymer material are such that the average melt flow index is from 5 to 8.

7.  A body according to any one of claims 1 to 6, characterized in that said polymer materials are of the same kind.

8.  A body according to any one of claims 1 to 7, characterized in that said polymer materials are constituted by polyethylene.

9.  A method of making a body according to any one of claims 1 to 8, characterized in that it consists of:
    - mixing said polymer materials;
    - heating the material resulting from the mixture of said polymer materials;
    - applying a stress to said resultant material in such a manner as to organize it.

10. A method of making a body according to any one of claims 1 to 8, characterized in that it consists of:
    - making a synthetic material whose curve of molecular concentration relative to molecular weight has at least two peaks of different molecular weights;
    - heating said synthetic material;
    - applying a stress to said synthetic material in such a manner as to organize it.

11. A method according to claim 9 or 10, characterized in that said stress is applied to said material by compressing said material in an extrusion die (28), said material being shaped around an electric conductor (26) to be insulated.

12. A method according to claim 9 or 10, characterized in that said stress is applied to said material by injection molding said material in a mold.

13. A method according to claim 9 or 10, characterized in that said stress is applied to said material by compressing said material in a mold.

# FIG.1

# FIG.2

# FIG.3

# FIG. 4

# FIG. 5

# FIG. 6

## FIG.7

## FIG.8

## FIG.9

## FIG.10